# EUROPÄISCHE PATENTSCHRIFT

(11) **EP 1 389 709 B1**
(45) Veröffentlichungstag und Bekanntmachung des Hinweises auf die Patenterteilung: **29.12.2004**
(21) Anmeldenummer: 03014009.9
(22) Anmeldetag: 21.06.2003
(51) Int. Cl.: F21L 4/00, F21V 33/00, F21S 9/02

(54) **Stabförmige Lampe**
Rod-like lamp
Lampe en forme de barre

(30) Priorität: 12.08.2002 DE 20212529 U
(43) Veröffentlichungstag der Anmeldung: 18.02.2004
(73) Patentinhaber: Zweibrüder Optoelectronics GmbH, 42699 Solingen (DE)
(72) Erfinder: Opolka, Rainer, 42699 Solingen (DE)
(74) Vertreter: Vomberg, Friedhelm, Dipl.-Phys.

(56) Entgegenhaltungen:
- US-A- 4 827 389
- US-B1- 6 183 112
- US-B1- 6 199 997
- PATENT ABSTRACTS OF JAPAN vol. 2002, no. 03, 3. April 2002 (2002-04-03) & JP 2001 325801 A (JAPAN AVIATION ELECTRONICS INDUSTRY LTD), 22. November 2001 (2001-11-22)

## Beschreibung

Die Erfindung betrifft eine stabförmige Lampe mit einem ein Batterieschubfach aufweisenden Schaft und einem Lampenkopf mit einer Lichtquelle, die vorzugsweise eine oder mehrere Leuchtdiode aufweist.

Bereits in der WO 02/057684 A1, die den Oberbegriff des Anspruchs 1 offenbart, wird eine Wohnraumlampe beschrieben, die einen Lampenfuß, einen Lampenschaft und eine Lichtquelle, die in im Lampenschaft angeordneten Fassung austauschbar festigt ist, beschrieben. Als Lichtquelle werden eine oder mehrere Leuchtdioden verwendet, die im Lampenschaft angeordnet ist bzw. sind und die einen auf das Lampenschaftende austauschbar aufgesteckten Leuchtkörper anstrahlt. Der Leuchtkörper kann stab- oder kugelförmig sein und besteht aus einem transparenten Material, vorzugsweise aus Kunststoff. In einer besonderen Ausführungsform ist der Lampenschaft als stabförmige Taschenlampe ausgebildet und weist einen inneren Hohlraum als Batterieschubfach auf, der nach Abschrauben des Lampenschaftes vom Lampenfuß mittels eines Batterieschubfachdeckels verschließbar ist. Die Lampe kann sowohl mit als auch ohne den aufgesetzten Leuchtkörper verwendet werden.

Außerdem wird in der US 6 199 977 eine Taschenlampe beschrieben, die an dem dem Lampenkopf, in dem die Lichtquelle angeordnet ist, abgewandten Ende ein Schlagwerkzeug aufweist, welches ausgebildet ist, um in Notfällen Glas zu zerschlagen. Dieses ist eine in dem Verschlussdeckel des Batterieschubfaches befestigten Spitze, die aus dem Deckel herausgenommen und ausgetauscht werden kann.

Der Vorteil von tragbaren Lampen, die mit Leuchtdioden betrieben werden, besteht darin, dass Leuchtdioden im Betrieb einen gegenüber Glüh- bzw. Glimmlampen erheblich geringeren Stromverbrauch haben, so dass bei vorhandener Batteriekapazität eine längere Leuchtdauer gewährleistet ist. Hinzu kommt, dass Leuchtdioden erheblich schlagunempfindlicher sind als mit Glühfäden bestückte Lampen. Aber auch unabhängig davon ist die gesamte Lebensdauer einer Glühbirne deutlich geringer als die einer Leuchtdiode.

Es ist Aufgabe der vorliegenden Erfindung, eine stabförmige Lampe mit neuen, erweiterten Anwendungsbereichen zu schaffen.

Diese Aufgabe wird durch die stabförmige Lampe nach Anspruch 1 gelöst, bei der erfindungsgemäß an dem den Lampenkopf abgewandten Ende ein umsteckbares Fußteil lösbar befestigt ist, dessen erstes Ende als Steckspieß und dessen zweites Ende als Schlagwerkzeug ausgebildet ist. Neben ihrer ersten Funktion als tragbarer stabförmiger Lampe kann je nach herausragendem Fußteilende die Lampe in den Boden eingesteckt werden, so dass sie im Garten oder am Wegesrand als Leuchtmittel dient. Durch entsprechendes Umstecken des Fußteils kann auch am gegenüberliegenden Ende des Lampenkopfes das Schlagwerkzeug montiert werden, mit dem es möglich ist, in Notfällen Autoscheiben oder Tür- bzw. Fensterscheiben zu zertrümmern, um gefährdeten Personen zu helfen. In Unfallsituationen ist nicht selten ein Öffnen einer Pkw-Tür nicht möglich, so dass der Zugang zu den Unfallopfern versperrt ist. Führen Rettungskräfte oder auch Privatpersonen eine erfindungsgemäße Lampe im Fahrzeug mit, kann das Schlagwerkzeug der Lampe zum Zerstören einer Front-, Rück- oder Seitenscheibe dienen, so dass die Unfallopfer über die dann zugängliche Fensteröffnung geborgen werden können. Entsprechendes gilt auch bei Hausbränden, insbesondere dann, wenn die Hausinsassen durch Gasentwicklung, insbesondere durch Kohlenmonoxid, bereits bewußtlos sind und dem Brandherd nicht mehr entfliehen können. Oftmals bleibt als einzige Rettungsmöglichkeit, vorhandene Türen oder Fenster einzuschlagen, um in die Räume gelangen zu können.

In der Dunkelheit ist es ohnehin zumindest zweckmäßig, wenn nicht notwendig, eine tragbare Lampe mitzuführen, insbesondere dann, wenn unwegsames Gelände wie Autobahnböschungen etc. begangen werden muß. In solchen Fällen haben helfende Personen, welche die erfindungsgemäße Lampe benutzen, stets ein entsprechendes Schlagwerkzeug parat, das ansonsten als separater Hammer, wie er in öffentlichen Verkehrsmitteln zu finden ist, mitgeführt werden müßte. Aus der Entfernung ist jedoch selten erkennbar, ob ein Schlagwerkzeug zur Rettung der hilfsbedürftigen Personen notwendig ist, so dass häufig durch Herbeischaffen entsprechenden Gerätes wertvolle Zeit vergeht.

Selbst in den Fällen, in denen das Schlagwerkzeug nicht oder nicht mehr benötigt wird, kann die stabförmige Lampe bzw. der Steckspieß in den Boden gerammt werden, so dass hiermit eine stationäre Lichtquelle geschaffen werden kann. Insbesondere in Verbindung mit einem aufgesteckten oder am Lampenkopf eingeschraubten Acrylstab läßt sich auf Parties, Gartenfesten oder auch am Unfallort eine gute Leuchtwirkung erzielen, worauf später noch eingegangen wird.

Weiterbildungen der Erfindung sind in den Unteransprüchen beschrieben.

So sind vorzugsweise beide Enden des genannten Fußteils zumindest im wesentlichen endseitig kegelförmig ausgebildet, wobei der Kegelwinkel des Steckspießendes vorzugsweise kleiner ist als der Kegelwinkel des Schlagwerkzeuges. Das Einstecken eines Steckspießes in den Boden wird durch das spitz zulaufende Fußteilende erheblich vereinfacht, zum Teil sogar erst ermöglicht. Grundsätzlich sind Steckspieße bei Außenleuchten bereits bekannt, jedoch sind diese Steckspieße fest mit dem Lampengehäuse verbunden. Umgekehrt kommt es bei einem Schlagwerkzeug primär auf dessen Härte an. Ein spitz ausgeführtes Schlagwerkzeug hätte zudem den Nachteil, dass ggf. eine Autoglasscheibe lediglich engflächig durchstoßen, aber nicht entscheidend zerstört wird. Aus diesem Grund ist der Kegelwinkel des Schlagwerkzeuges größer zu wählen, damit beim Schlag eine entsprechende Flächenwirkung erzielt werden kann.

Zur besseren Handhabbarkeit besitzt das Fußteil ein zylindrisches Mittelstück, dessen Außenmanteldurchmesser dem Innenmanteldurchmesser des dem Lampenkopf abgewandten offenen Endes des Schaftes der Lampe etwa gleich groß ist, so dass das Mittelstück entweder zu einer reibschlüssigen Verbindung einsteckbar oder durch eine entsprechende Gewindeverbindung einschraubbar ist. Letztere Möglichkeit wird bevorzugt, da diese hinreichend stabil ist.

Nach einer weiteren Ausbildung der Erfindung ist der Lampenkopf austauschbar am Lampenschaft befestigt, vorzugsweise über eine Schraubverbindung. Auf diese Weise kann der komplette Lampenkopf mit einer oder mehreren Leuchtdioden ausgetauscht werden, etwa, um von einer Leuchtfarbe auf eine andere Leuchtfarbe wechseln zu können. Leuchtdioden haben ja nach Bauart ein unterschiedliches Abstrahlungsspektrum. So sind im wesentlichen weiß leuchtende, blau, orange, gelb und rot leuchtende Dioden bekannt. Der Besucher von Gartenfesten kann dies beispielsweise dadurch nutzen, dass er zur Ausleuchtung des Gehweges einen Lampenkopf mit Leuchtdioden wählt, die weißes Licht abstrahlen. Am Zielort kann durch Wechsel des Lampenkopfes auf Rot, Blau oder Gelb "gewechselt" werden, wobei die stabförmige Lampe mittels des Steckspießes in den Boden gerammt werden kann. Ggf. läßt sich vor Ort auch am Lampenkopf ein transparenter Acrylglasstab aufschrauben, der die Leuchtwirkung erhöht.

Nach einer weiteren Ausgestaltung der Erfindung besitzt der Lampenkopf eine oder mehrere Leuchtdioden, eine Platine, auf der diese Diode (n) aufgesteckt ist, sowie an der Innenseite eine spiralförmige Kontaktfeder, die unter Federspannung an der im Lampenschaft eingelegten, ggf. obersten oder einzigen Batterie anliegt. Taschenlampen üblicher Bauart besitzen am Batterieschubfachende einen ein- oder aufschraubbaren Deckel, der mit einer Kontakt-Spiralfeder ausgestattet ist, die zum Schließen des Stromkreises einerseits sowie auch zum Andrücken der Batterie bzw. des Batteriestapels dient. Da erfindungsgemäß das der Lichtquelle abgewandte Ende mit einem Fußstück versehen ist, wäre es ohne die vorgenannte Ausgestaltung notwendig, ein entsprechendes abschraubbares Endstück vorzusehen, das einerseits als Batterieschubfach-Abschlußdeckel, aber auch als Aufnahmehülse für das Fußteil dient. Dies wird umgangen, wenn die betreffende, auch als Kontaktfeder dienende Spiralfeder am Lampenkopf selbst angeordnet ist. Das Batterieschubfach zum Einlegen bzw. Entnehmen der Batterien wird zugänglich, indem der Lampenkopf abgeschraubt wird.

Nach einer weiteren Ausgestaltung der Erfindung weist das Mittelstück des Fußteils im Anschluß an das kegelförmige Teil des Schlagwerkzeuges ein Außengewinde auf, das bei befestigtem Fußteil außen freiliegt, so dass eine mit einem entsprechend ausgebildeten Innengewinde ausgestatteter Hohldeckel aufschraubbar ist. Dieser Hohldeckel kann dazu verwendet werden, das Schlagwerkzeug außen abzudecken. Gleichzeitig wird mit dem Abschlußdeckel die im wesentlichen zylindrische Stabform der Lampe auch am hinteren Lampenende fortgeführt.

Wie bereits erwähnt, ist am Lampenkopf vorzugsweise in lichttransparenter, insbesondere stabförmiger Leuchtkörper lösbar befestigt. Besonders geeignet sind Leuchtkörper aus einem Kunststoff wie Acrylglas (PMMA). Zwischen dem Lampenkopf und dem Acrylglas wird bevorzugt eine Gewindeverbindung gewählt. Hierzu besitzt der Lampenkopf an seinem offenen Ende ein Innengewinde, in das das Außengewinde eines Acrylstabs mit entsprechend angepaßtem Durchmesser und identischer Gewindesteigung eingeschraubt wird. Der Acrylstab dient als "passives Leuchtmittel", das aufgrund seiner leicht mattglasigen Struktur das von dem Lampenkopf abgestrahlte Licht diffus reflektiert. Besondere Leuchteffekte lassen sich erzeugen, wenn im Acrylglasstab am Außenmantel Nuten eingefräst sind, deren Formgestaltung beliebig sein kann. Solche Nuten geben die geometrische Nutenkontur durch verstärkte Reflexion deutlich sichtbar wieder.

Im Rahmen der vorliegenden Erfindung kann der Lampenkopf beispielsweise drei Leuchtdioden mit gleich- oder andersfarbiger Leuchtcharakteristik aufweisen. Werden alle Dioden mit unterschiedlicher Farbabstrahlung zeitgleich eingeschaltet, lassen sich hierdurch Farbmischungen herstellen. Ebenso kann über elektronische Wechselschaltungen mit periodisch steuerbaren Ein- und Ausschaltzeiten der einzelnen vorhandenen Dioden ein Farbwechseleffekt erzeugt werden. Gleichermaßen lassen sich Blinkfunktionen realisieren. Hierzu kann ein einziger, als Serienschalter ausgebildeter Schalter vorgesehen sein oder eine entsprechende Anzahl von Schaltern, die unterschiedliche Leuchtfunktionen auslösen.

Weitere Ausführungsformen sowie Vorteile der erfindungsgemäßen Lampe werden im folgenden anhand der Zeichnungen beschrieben. Es zeigen
- Fig. 1 bis 5: jeweils Seitenansichten eines ersten erfindungsgemäßen Lampentyps,
- Fig. 6: die Seitenansicht einer stabförmigen Lampe mit drei austauschbaren Lampenköpfen,
- Fig. 7: eine perspektivische Ansicht einer stabförmigen Lampe mit aufgeschraubtem Acrylstab,
- Fig. 8: eine perspektivische Ansicht gemäß der Lampe nach Fig. 6 und
- Fig. 9: eine erfindungsgemäße Lampe mit abgeschraubtem Lampenkopf.

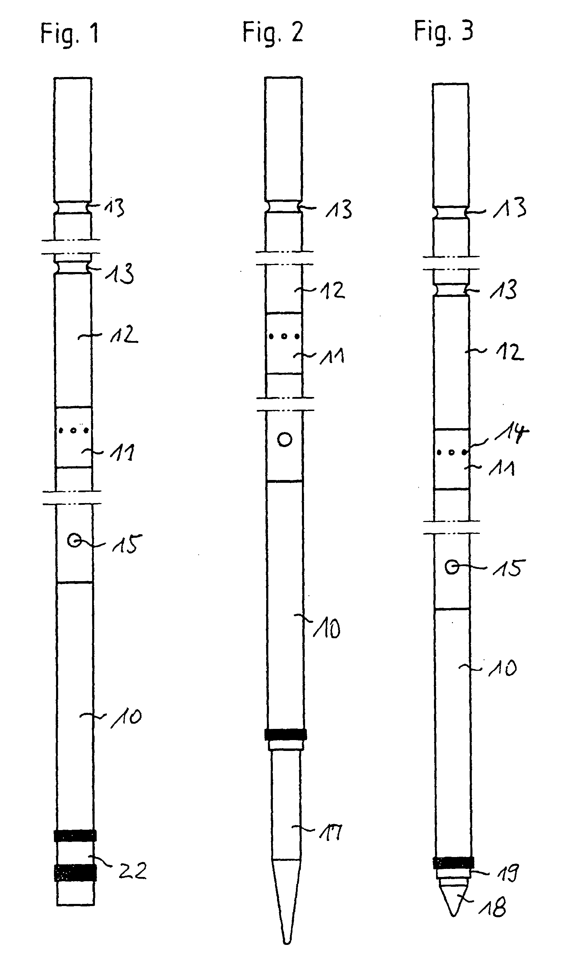

Die stabförmige Lampe gemäß der vorliegenden Erfindung besteht im wesentlichen aus einem Lampenschaft 10, der auch das Batterieschubfach beinhaltet und einem Lampenkopf 11. Auf das offene Ende des Lampenkopfes 11 kann gemäß Fig. 1 bis 3 ein Acrylstab 12 aufgeschraubt sein, der im dargestellten Ausführungsbeispiel eine oder mehrere ringförmige Nuten 13 am Außenmantel aufweist. Die Länge des Lampenschaftes 10 kann beliebig gewählt werden, sollte jedoch bevorzugt bei 30 bis 50 cm liegen. Der Durchmesser des Lampenschaftes, der im wesentlichen zylindrisch ist, liegt bei 2 bis 3 cm und ist gleich groß dem Durchmesser des Lampenkopfes 11. Der Lampenkopf kann optional mehrere durchgehende Bohrungen 14 aufweisen, die je nach Lage zur Diode seitlich Licht abstrahlen. Die Lampe wird über einen Druckschalter 15 ein- und ausgeschaltet, dessen Lage am Lampenschaft 10 grundsätzlich beliebig wählbar ist. Die Länge des Acrylglasstabes 12 kann ebenfalls beliebig gewählt werden, wobei aus Proportionsgründen deren Länge etwa gleich der Länge des Lampenschaftes einschließlich des Lampenkopfs gewählt wird.

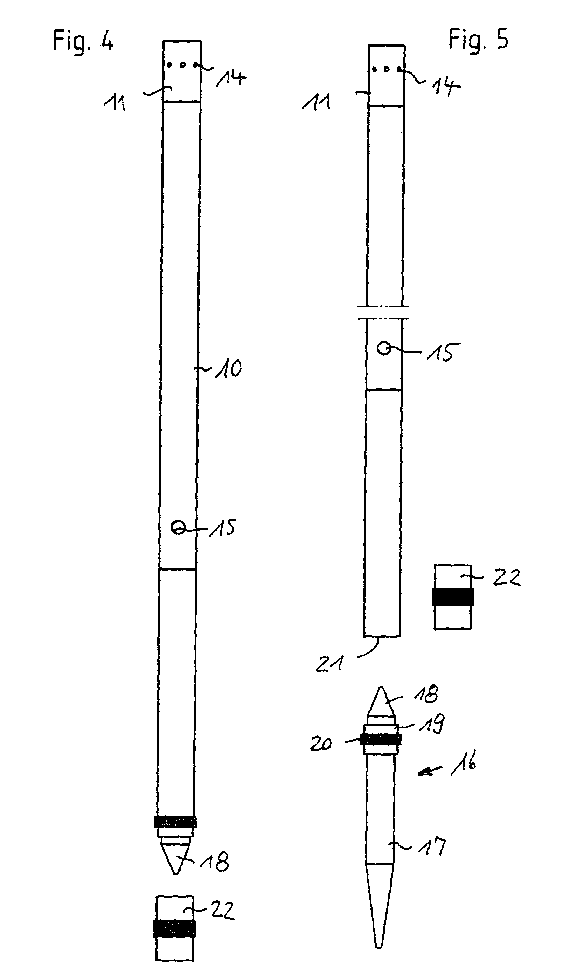

Erfindungsgemäß ist an dem dem Lampenkopf abgewandten Ende ein umsteckbares Fußteil 16 (siehe Explosionszeichnung in Fig. 5) lösbar befestigt, dessen erstes Ende als Steckspieß 17 und dessen zweites Ende als Schlagwerkzeug 18 ausgebildet ist. Wie Fig. 5 zu entnehmen ist, besitzt dieses Fußteil 16 ein zylindrisches Mittelstück 19 mit einem Außengewinde (hier beidseitig) eines Wulstes 20, das in das Innengewinde am Lampenende 21 einschraubbar ist, so dass entweder der Steckspieß 17 als unteres Lampenteil oder das Schlagwerkzeug 18 (siehe Fig. 3) freiliegt. Optional und in Fig. 1, 4 und 5 dargestellt, kann noch ein Deckel 22 auf das Außengewinde des Mittelstückes 19 aufgeschraubt werden, wobei der Deckelinnenhohlraum eine Tiefe aufweist, die größer sein muß als die Länge des Schlagwerkzeugs 18. Der Steckspieß 17 ist im oberen Teil zylindrisch und nach vorne hin spitz ausgebildet, um eine leichtes Einrammen dieses Spießes in einen Boden zu ermöglichen. Das Schlagwerkzeug 18 besteht im wesentlichen aus einem kurzen Kegelstück mit abgerundeter Spitze, bei dem ein erheblich größerer Kegelwinkel gewählt worden ist. Die Lampe kann mit oder ohne aufgeschraubtem Deckel 22 und mit oder ohne Acrylstab 12 mitgeführt und als Leuchtmittel benutzt werden. Soll die Lampe als stationäre Lampe in den Boden gesteckt werden, muß ggf. der Deckel 22 entfernt, das Fußteil aus der in Fig. 3 und 4 ersichtlichen Lage herausgeschraubt, umgedreht und wieder eingeschraubt werden, wodurch sich die Form gemäß Fig. 2 ergibt. Der Lampenschaft ist an seinem unteren Ende hohl ausgeführt und muß eine Hohlraumtiefe besitzen, die geeignet ist, um den Steckspieß 17 in voller Länge aufzunehmen.

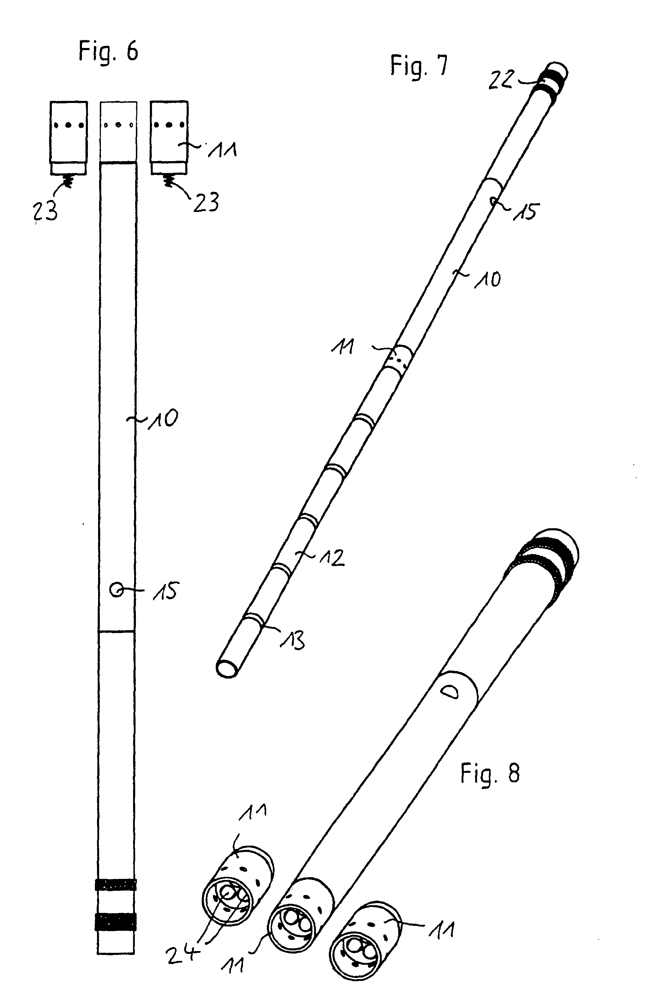

Wie aus Fig. 6 und 8 ersichtlich, können unterschiedliche Lampenköpfe 11, die mit verschiedenen, insbesondere verschiedenfarbigen Dioden ausgestattet sind, verwendet werden. Der Lampenkopf 11 ist hierzu im Lampenschaft 10 lösbar eingeschraubt. Am hinteren Ende ist eine Spiralfeder 23 angeordnet, welche den Kontakt zu den im Lampenschaft angeordneten Batterien herstellt. Die in Fig. 8 dargestellte Lampe ist mit drei Leuchtdioden 24 bestückt.

Eine ohne Unterbrechung, das heißt in ihrer vollen Länge dargestellte Lampe mit aufgesetztem Acrylglasstab 12, ist in verkleinerter Darstellung Fig. 7 zu entnehmen, aus der mögliche Proportionen deutlich werden. Der Acrylglasstab 12 besitzt mehrere manteilseitig eingefräste Nuten 13, die im eingeschalteten Zustand als Ringbereiche in unterschiedlicher Höhe stark reflektierend sichtbar werden. Die hierbei erzeugte Optik kann insbesondere bei Gartenfesten oder auch als Wegraumbeleuchtung benutzt werden.

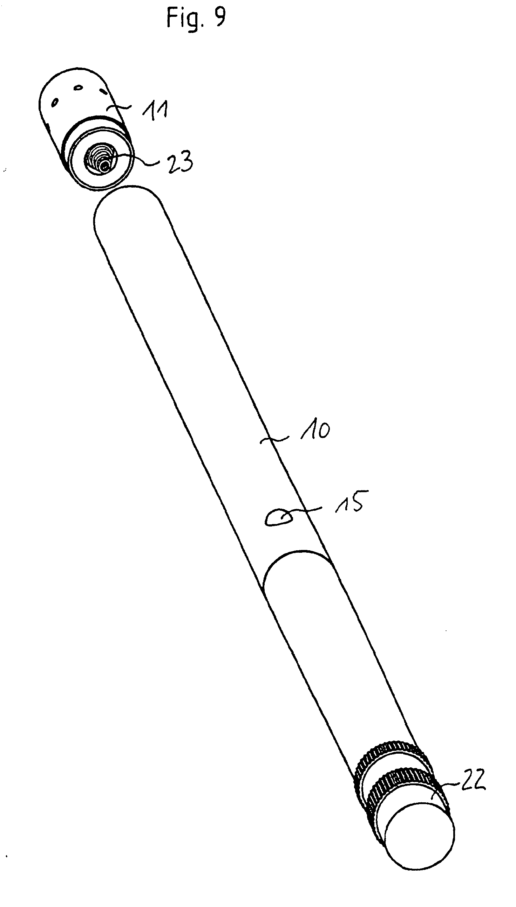

Fig. 9 zeigt die Lampe mit abgeschraubtem Lampenkopf 11, die unten mit einem Deckel 22 verschlossen ist.

Aus vorstehenden Erläuterungen wird deutlich, dass die Lampen als Langstabtaschenlampen im Bedarfsfall (ohne aufgeschraubten Acrylglasstab) ebenso wie in dem Pkw, oder auch als Ausstattungsutensil bei Feuerwehr, Polizei, technischem Hilfswerk oder ähnlichen Diensten mitgeführt bzw. benutzt werden können. Der aufschraubbare Acrylstab dient zu Beleuchtungszwecken im Freizeitbereich oder auch in Verbindung mit dem Steckspieß als temporäre Wegleuchte oder ähnlichem. Da in der Taschenlampe integriert stets das Schlagwerkzeug mitgeführt wird, ergeben sich bei Bedarf weitere Anwendungsmöglichkeiten, ohne dass die Handhabbarkeit der Lampe und deren Form hierdurch beeinträchtigt wird.

Zu dem Aufbau des Lampenkopfes wird im übrigen auf die Ausführungen der WO 02/057684 A1 verwiesen, insbesondere hinsichtlich der erhöhten Leuchtwirkung durch Verwendung eines Hohlreflektors.

## Patentansprüche

1. Stabförmige Lampe mit einem ein Batterieschubfach aufweisenden Schaft (10) und einem Lampenkopf (11) mit einer Lichtquelle, die vorzugsweise eine oder mehrere Leuchtdioden (24) aufweist,
**dadurch gekennzeichnet,**
**dass** an dem dem Lampenkopf (11) abgewandten Ende ein umsteckbares Fußteil (16) lösbar befestigt ist, dessen erstes Ende als Steckspieß (17) und dessen zweites Ende als Schlagwerkzeug (18) ausgebildet ist.

2. Lampe nach Anspruch 1, **dadurch gekennzeichnet, dass** beide Enden (17, 18) des Fußteils (16) zumindest im wesentlichen endseitig kegelförmig ausgebildet sind, wobei der Kegelwinkel des Steckspießendes vorzugsweise kleiner ist als der Kegelwinkel des Schlagwerkzeugs.

3. Lampe nach Anspruch 1 oder 2, **dadurch gekennzeichnet, dass** das Fußteil (16) ein zylindrisches Mittelstück (19) aufweist, dessen Außenmanteldurchmesser dem Innendurchmesser des dem Lampenkopfes (11) abgewandten offenen Endes (21) des Schaftes (10) etwa gleich groß ist, so dass das Mittelstück (19) entweder zu einer reibschlüssigen Verbindung einsteckbar oder durch eine entsprechende Gewindeverbindung einschraubbar ist.

4. Lampe nach einem der Ansprüche 1 bis 3, **dadurch gekennzeichnet, dass** der Lampenkopf (11) austauschbar am Lampenschaft (10) befestigt ist, vorzugsweise eingeschraubt ist.

5. Lampe nach Anspruch 4, **dadurch gekennzeichnet, dass** der Lampenkopf (10) eine oder mehrere Leuchtdioden (24), eine Platine, auf der diese Diode (n) (24) aufgesteckt ist, sowie an der Innenseite eine spiralförmige Kontaktfeder (23) aufweist, die unter Federspannung an der im Lampenschaft (10) eingelegten, ggf. obersten Batterie, anliegt.

6. Lampe nach einem der Ansprüche 3 bis 5, **dadurch gekennzeichnet, dass** das Mittelstück (19) des Fußteils (16) im Anschluß an das kegelförmige Teil des Schlagwerkzeugs (18) ein Außengewinde aufweist, das bei befestigtem Fußteil außen freiliegt, so dass eine mit einem entsprechend ausgebildeten Innengewinde ausgestatteter Hohldeckel (22) aufschraubbar ist.

7. Lampe nach einem der Ansprüche 1 bis 6, **dadurch gekennzeichnet, dass** am Lampenkopf (11) ein lichttransparenter, vorzugsweise stabförmiger Leuchtkörper (12) lösbar befestigt ist.

8. Lampe nach Anspruch 7, **dadurch gekennzeichnet, dass** der Leuchtkörper (12) aus Kunststoff, vorzugsweise Acrylglas (PMMA) besteht und/oder auf dem Lampenkopf (11) aufgeschraubt ist.

## Claims

1. Rod-like lamp with a hollow shaft (10) having a battery drawer and a lamp head (11) provided with a light source which has preferably one or more light emitting diodes (24)
**characterised in that**
the end opposite to the lamp head (11) a reversible foot member (16) is removably mounted, the first and of said member being formed as a spike (17) and the second end of said member being formed as an impact tool (18).

2. Lamp according to claim 1, **characterised in that** both ends (17, 18) of the foot member (16) are at least essentially conical at its end, whereby the apex angle of said spike end preferably being less than the apex angle of said tool.

3. Lamp according to claim 1 or 2, **characterised in that** the foot member (16) has a cylindrical central portion (19) of which the outer casing is about as large as the inner diameter of the open end (21) of the shaft (10) at the opposite end to the lamp head (11), so that the central portion (19) either has a friction fit in said shaft or is threaded into said shaft.

4. Lamp according to one of the claims 1 to 3, **characterised in that** the lamp head (11) is mounted replaceably on the lamp shaft (10), preferably by a screw joint.

5. Lamp according to claim 4, **characterised in that** the lamp head (11) comprises a plat, a plurality of light-emitting diodes (24) mounted on said plate and a spiral contact spring (23) resiliently engageable with a battery in the lamp shaft (10).

6. Lamp according to one of the claims 3 to 5, **characterised in that** neighboured to the conical part of the impact tool (18), the central portion (19) of the foot member (16) has an outer threading being exposed when the foot member is mounted, so that a hollow cap (22) with a corresponding inner threading can be screwed onto.

7. Lamp according to one of claims 1 to 6, **characterised in that** a light-transmitting, preferably rod-like illuminated body (12) is affixed to the lamp head.

8. Lamp according to claim 7, **characterised in that** the illuminated body (12) is composed of plastic, preferably of acrylic glass (PMMA) and/or is screwed onto the lamp head (11).

## Revendications

1. Lampe en forme de bâton avec une tige (10) présentant un tiroir à piles et avec une tête de lampe (11) comprenant une source de lumière qui, de préférence, présente une ou plusieurs diodes lumineuses (24) **caractérisée par le fait qu'**une partie "pied" (16) réversible est fixée de manière amovible à l'extrémité montrant dans la direction opposée à la tête de lampe (11), la première extrémité de ladite partie "pied" étant réalisée en tant que broche à ficher en terre (17) et son deuxième extrémité étant réalisée comme outil à casser (18).

2. Lampe selon la revendication 1, **caractérisée par le fait que** les deux extrémités (17, 18) de la partie "pied" (16), au moins à leur bout, sont pour l'essentiel coniques, l'angle de cône du bout de la broche à ficher en terre étant de préférence plus petit que l'angle de cône de l'outil à casser.

3. Lampe selon la revendication 1 ou 2, **caractérisée par le fait que** la partie "pied" (16) présente une pièce centrale cylindrique (19) dont le diamètre de la nappe extérieure est à peu près égal au diamètre intérieur de l'extrémité ouverte (21) de la tige (10), qui montre dans la direction opposée à la tête de lampe (11), de sorte que ladite pièce centrale (19) soit peut être introduite pour obtenir une liaison entraînée par friction soit peut être vissée dedans par un raccordement fileté correspondant.

4. Lampe selon l'une des revendications 1 à 3, **caractérisée par le fait que** la tête de lampe (11) est fixée sur la tige de lampe (10) de manière à être échangeable, de préférence elle est vissée dedans.

5. Lampe selon la revendication 4, **caractérisée par le fait que** la tête de lampe (11) présente une ou plusieurs diodes lumineuses (24), une platine sur laquelle cette ou bien ces diode(s) (24) est ou bien sont fixée(s) ainsi que, sur la face interne, un ressort de contact (23) hélicoïdal qui s'appuie sous la tension du ressort sur la pile, le cas échéant la pile supérieure, placée dans la tige de lampe (10).

6. Lampe selon l'une des revendications 3 à 5, **caractérisée par le fait que** la pièce centrale (19) de la partie "pied" (16), qui est contiguë à la partie conique de l'outil à casser (18), présente un filet extérieur qui, lorsque la partie "pied" est fixée, est dégagé à l'extérieur, de sorte qu'un couvercle creux (22) pourvu d'un filet intérieur réalisé de manière correspondante peut être vissé dessus.

7. Lampe selon l'une des revendications 1 à 6, **caractérisée par le fait qu'**un corps lumineux (12) transparent à la lumière, de préférence en forme de bâton est fixé de manière amovible sur la tête de lampe (11).

8. Lampe selon la revendication 7, **caractérisée par le fait que** ledit corps lumineux (12) est fait de matière plastique, de préférence de verre acrylique (PMMA) et/ou est vissé sur la tête de lampe (11).
